# EUROPEAN PATENT APPLICATION

(11) **EP 4 822 235 A1**
(43) Date of publication of application: **14.10.2026**
(21) Application number: 26167675.3
(22) Date of filing: 25.03.2026
(51) Int. Cl.: F16M 7/00

(54) **ANTI-SLIPPAGE LEVELING DEVICE**

(30) Priority: 08.04.2025 IT 202500007680
(71) Applicant: A.T.P. S.p.A., 41122 Modena (IT)
(72) Inventor: SASSI, Alessandro, I- 41122 Modena (IT)
(74) Representative: Long, Giorgio

(57) **Abstract**

The present invention relates to a leveling device for heavy loads, of the type used, for example, in shipyards.

In particular, the invention relates to a support device (1) for heavy loads comprising a first and a second wedge-shaped support element (2, 3), a first and a second wedge-shaped adjustment element (4, 5), an adjustment member (6) for adjusting the mutual distance between said first and second wedge-shaped adjustment elements (4, 5), wherein said first wedge-shaped support element (2) comprises an upper face (2a), configured to support the heavy load, and two converging oblique faces (2b, 2c), and two side faces (2d), wherein said second wedge-shaped support element (3) comprises a lower face (3a), configured to support the support device (1) on a fixed surface, two converging oblique faces (3b, 3c), and two side faces (3d), said first and second wedge-shaped support elements (2, 3) being arranged so that the respective oblique faces (2b, 2c, 3b, 3c) face one another; wherein said first and second wedge-shaped adjustment elements (4, 5) comprise a front face (4a, 5a), an upper oblique face (4b, 5b), a lower oblique face (4c, 5c), and two side faces (4d, 5d), respectively, wherein said upper (4b, 5b) and lower (4c, 5c) oblique faces are converging and wherein said wedge-shaped adjustment elements (4, 5) are arranged so that the respective oblique faces (4b, 4c, 5b, 5c) face one another; and wherein said upper oblique faces (4b, 5b) act on said oblique faces (2b, 2c) of the first wedge-shaped support element (2), respectively, and said lower oblique faces (4c, 5c) act on said oblique faces (3b, 3c) of the second wedge-shaped support element (3), respectively, **characterized in that** it comprises a system for the lateral control of the relative slippage between said first and second wedge-shaped support elements (2, 3) and said first and second wedge-shaped adjustment elements (4, 5).

## Description

### Technical field of invention

The present invention relates to a leveling device for heavy loads, of the type used, for example, in shipyards.

### State of the art

A problem felt in the manufacture of objects of high size and weight is that of keeping the object under construction on a substantially horizontal plane, so as to avoid its imbalance with serious consequences for men, vehicles and installations.

A typical example is the construction of ships in shipyards.

For this purpose, adjustable supports are used, known as levelers, which are interposed between the ground and the object to be supported, typically but not exclusively the hull of a ship, and which, depending on the size and weight of the body to be supported, can also be used in large numbers, for example hundreds or even thousands.

The leveler is an element capable of supporting loads and, by means of an adjustment screw, varying the height of the same at will to maintain the weight at a desired height.

The structure of the leveler allows it to work both individually and in combination with other levelers in order to, if necessary, partition the load and distribute it over the various elements.

The current state of the art provides for two wedge-shaped support elements, a lower one resting on the ground or on a fixed surface and an upper one supporting the load, and two wedge-shaped adjustment elements interposed between the two wedge-shaped support elements, with the adjustment screw operating on the two wedge-shaped adjustment elements.

The upper wedge-shaped support element usually has two converging oblique faces, which rest on two equivalent oblique faces of the two wedge-shaped adjustment elements.

The lower wedge-shaped support element also usually has two converging oblique faces, on which rest two further equivalent oblique faces of the two wedge-shaped adjustment elements.

The upper wedge-shaped support element therefore rests on the two wedge-shaped adjustment elements, which in turn rest on the lower wedge-shaped support element.

The stability of the leveler structure is maintained by two factors: the oblique faces of the four wedge-shaped elements prevent the elements themselves from moving along the axis of the adjustment screw; the weight of the load supported by the leveler instead generates a sufficient friction between the wedge-shaped elements which prevents the relative movement between the elements themselves along the axis parallel to the ground and perpendicular to the axis of the adjustment screw.

As long as the leveler is loaded with a weight, therefore, the friction between the wedge-shaped elements generated by the weight allows the wedge-shaped elements themselves to remain in the correct position.

However, when the leveler is unloaded or during the loading phase, or even in the event of accidental impacts, it could happen that there is a relative sliding between the wedge-shaped elements along the axis parallel to the ground and perpendicular to the axis of the adjustment screw.

This relative sliding is obviously undesirable, because it can lead to an incorrect and unforeseen distribution of the load among the elements of the leveler.

Furthermore, in the event that the relative sliding is particularly high, the leveler can end up collapsing, with potentially catastrophic consequences if this occurs during the loading phase of the leveler.

### Summary of the invention

The object of the present invention is a support device for heavy loads, also known as a leveler, as outlined in the attached claims, the definitions of which form an integral part of the present description for the purposes of sufficiency of description.

Objects of the present description and of the figures are therefore:
1) a support device for heavy loads comprising a first and a second wedge-shaped support element, a first and a second wedge-shaped adjustment element, an adjustment member for adjusting the mutual distance between said first and second wedge-shaped adjustment elements, wherein said first wedge-shaped support element comprises an upper face, configured to support the heavy load, two converging oblique faces, and two side faces, wherein said second wedge-shaped support element comprises a lower face, configured to support the support device on a fixed surface, two converging oblique faces, and two side faces, said first and second wedge-shaped support elements being arranged so that the respective oblique faces face one another; wherein said first and second wedge-shaped adjustment elements comprise, respectively, a front face, an upper oblique face, a lower oblique face, and two side faces, wherein said upper and lower oblique faces are converging and wherein said wedge-shaped adjustment elements are arranged so that the respective oblique faces face one another; and wherein said upper oblique faces act, respectively, on said oblique faces of the first wedge-shaped support element and said lower oblique faces act, respectively, on said oblique faces of the second wedge-shaped support element, wherein the support device comprises a system for the lateral control of the relative slippage between said first and second wedge-shaped support elements and said first and second wedge-shaped adjustment elements;
2) a support device as in point 1, wherein the adjustment member comprises a longitudinal body with a longitudinal axis ending at the two ends with a first and a second threaded portion, and backing elements placed, respectively, on said first and second threaded portions, the adjustment member being inserted in a through hole present on the front faces of the wedge-shaped adjustment elements, so that the threaded portions and the respective backing elements emerge out of the wedge-shaped adjustment elements;
3) a support device as in point 1, wherein the adjustment member comprises a single screw comprising a longitudinal body having a threaded portion and a locking end, the threaded portion being coupled to a backing element, the adjustment member being inserted into a through hole present on the front faces of the wedge-shaped adjustment elements, so that the locking end and the threaded portion emerge out of the wedge-shaped adjustment elements;
4) a support device as in any one of points 1 to 3, wherein said support device comprises reinforcing plates parallel and adjacent to said front faces;
5) a support device as in any one of points 1 to 4, wherein said system for the lateral control of the slippage comprises one or more plates for the lateral control of the slippage;
6) a support device as in point 5, wherein said plates are made of metal material;
7) a support device as in any one of points 5 or 6, wherein said system for the lateral control of the slippage comprises a fixing system for fixing each plate to one of the side faces;
8) a support device as in point 7, wherein said side faces of said wedge-shaped elements are vertical, are parallel among themselves, and are parallel to said axis, wherein two plates are provided, fixed by means of said fixing system to said first wedge-shaped support element and each arranged on a different side face, and wherein two plates are provided, fixed by means of said fixing system to said second wedge-shaped support element and each arranged on a different side face;
9) a support device as in any one of points 5 or 6, wherein said system for the lateral control of the slippage comprises a fixing system for fixing each plate to one of the side faces;
10) a support device as in point 9, wherein said side faces of said wedge-shaped adjustment elements are vertical, are parallel among themselves, and are parallel to said axis, wherein said side faces of said wedge-shaped support elements are oblique and converging, wherein two plates are provided, fixed by means of said fixing system to said first wedge-shaped support element, each arranged on a different side face, and wherein two plates are provided, fixed by means of said fixing system to said second wedge-shaped support element, each arranged on a different side face;
11) a support device as in any one of points 9 or 10, wherein said plates have a cross-section with a V-shaped profile with an obtuse angle which identifies two portions of different width, wherein the larger portion is parallel and fixed with said fixing system to the corresponding side face, and wherein the smaller portion is parallel to the side faces;
12) a support device as in any one of points 5 or 6, wherein said system for the lateral control of the slippage comprises a fixing system for fixing each plate to an end of said reinforcing plate;
13) a support device as in point 12, wherein said side faces of said wedge-shaped elements are vertical, are parallel among themselves, and are parallel to said axis, wherein each reinforcing plate has two vertical edges, and for each reinforcing plate two plates are provided, one for each vertical edge, fixed by means of said fixing system or made in one piece with said reinforcing plate, wherein said plates are substantially parallel to said side faces;
14) a support device as in any one of points 12 or 13, wherein said plates are mainly rectangular in shape;
15) a support device as in point 14, wherein said plates have a V-shaped recess in the central part, said recess being symmetrical, being placed at an equal distance from an upper end and a lower end of said plates and facing said reinforcing plate with the tip of the V.

Further features and advantages of the present invention will become more apparent from the description of some examples of embodiment, given below by way of non-limiting indication, with reference to the following figures.

### Brief description of the figures

Figure 1A shows a perspective view of a leveler according to a first embodiment;
Figure 1B shows a side elevation view of the leveler of Figure 1A;
Figure 1C shows a top view of the leveler of Figure 1A;
Figure 2A shows a perspective view of a leveler according to a second embodiment;
Figure 2B shows a side elevation view of the leveler of Figure 2A;
Figure 3A shows a perspective view of a leveler according to a third embodiment;
Figure 3B shows a side elevation view of the leveler of Figure 3A;
Figure 3C shows a top view of the leveler of Figure 3A;
Figure 3D shows a perspective view of the leveler of Figure 3A with alternative plates;
Figure 3E shows a side elevation view of the leveler of Figure 3A with alternative plates;
Figure 4A shows a perspective view of a leveler according to a fourth embodiment;
Figure 4B shows a side elevation view of the leveler of Figure 4A;
Figure 4C shows a section of the leveler of Figure 4A along a vertical plane passing through the axis of the threaded element visible in Figure 4A.

### Detailed description of the invention

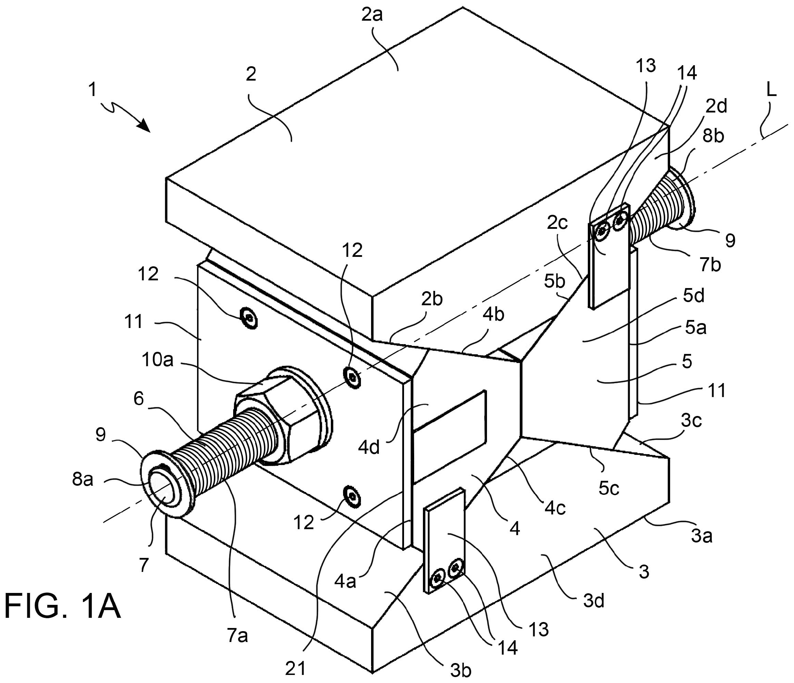

For the purposes of the present invention, terms such as "downwards" or "upwards" or "upper" or "lower" or "vertical" or "horizontal" must be understood with reference to Figure 1A, which represents a normal position of use.

With reference to the figures, the support device for heavy loads, object of the present invention, also known as a leveler, indicated as a whole with the number 1, comprises a first and a second wedge-shaped support element 2, 3, a first and a second wedge-shaped adjustment element 4, 5 and an adjustment member 6 for adjusting the mutual distance between said first and second wedge-shaped adjustment elements 4, 5.

The first wedge-shaped support element 2 comprises an upper face 2a, intended to support the heavy load, two converging oblique faces 2b, 2c, and two side faces 2d.

Similarly, the second wedge-shaped support element 3 comprises a lower face 3a, intended to support the leveler 1 on a fixed surface (for example, the floor of a shipyard), two converging oblique faces 3b, 3c, and two side faces 3d.

The first and second wedge-shaped support elements 2, 3 are arranged in the leveler 1 so that the respective oblique faces 2b, 2c, 3b, 3c face one another.

In other words, the two wedge-shaped support elements 2, 3 are placed in an inverted position.

The upper face 2a can be flat or have different shapes, for example V-shaped, or concave.

The first and second wedge-shaped adjustment elements 4, 5 comprise, respectively, a front face 4a, 5a, an upper oblique face 4b, 5b, a lower oblique face 4c, 5c, and two side faces 4d, 5d, wherein the upper 4b, 5b and lower 4c, 5c oblique faces are converging and wherein the wedge-shaped adjustment elements 4, 5 are arranged in the leveler 1 so that the respective oblique faces 4b, 4c, 5b, 5c face one another and wherein, in the leveler 1, the upper oblique faces 4b, 5b act, respectively, on the oblique faces 2b, 2c of the first wedge-shaped support element 2 and the lower oblique faces 4c, 5c act, respectively, on the oblique faces 3b, 3c of the second wedge-shaped support element 3.

The adjustment member 6, also known as a tie rod, comprises a longitudinal body 7 with a longitudinal axis L, ending at the two ends with a first 7a and a second threaded portion 7b, and backing elements 10a, 10b, for example nuts, placed, respectively, on said first and second threaded portions 7a, 7b.

The adjustment member 6 is inserted in a through hole present on the front faces 4a, 5a of the wedge-shaped adjustment elements 4, 5, so that the threaded portions 7a, 7b and the respective backing elements 10a, 10b emerge out of the wedge-shaped adjustment elements 4, 5.

By screwing the backing elements 10a, 10b, the mutual approach of the wedge-shaped adjustment elements 4, 5 is obtained, so as to obtain a lifting of the first wedge-shaped support element 2 thanks to the sliding of the inclined planes.

The adjustment of the height of the leveler 1 and therefore of the load supported by it is thus obtained.

Safety rings 9 are placed at the ends 8a, 8b of the adjustment member 6 to prevent the adjustment member 6 from slipping out of the wedge-shaped adjustment elements 4, 5.

Taking into account that the wedge-shaped support elements 2, 3 and adjustment elements 4, 5 are preferably made of rigid plastic material in order to limit weight and friction, the leveler 1 can comprise reinforcing plates 11 on which the backing elements 10a, 10b act, in order to avoid a direct contact between the wedge-shaped adjustment elements 4, 5, made of plastic material, and the backing elements 10a, 10b made of metal material.

The reinforcing plate 11 is an element of metal material consisting of a main body 11a parallel to the front faces 4a, 5a.

Furthermore, each reinforcing plate 11 is adjacent to one of the front faces 4a, 5a, and is fixed to it by means of screws 12.

In a different embodiment, not shown in the figures, the adjustment member 6 comprises a single screw comprising a longitudinal body having a threaded portion and a locking end, the threaded portion being coupled to a backing element, for example a nut and a relative washer.

The leveler 1 according to the invention is characterized in that it comprises a system for the lateral control of the relative slippage between said first and second wedge-shaped support elements 2, 3 and said first and second wedge-shaped adjustment elements 4, 5.

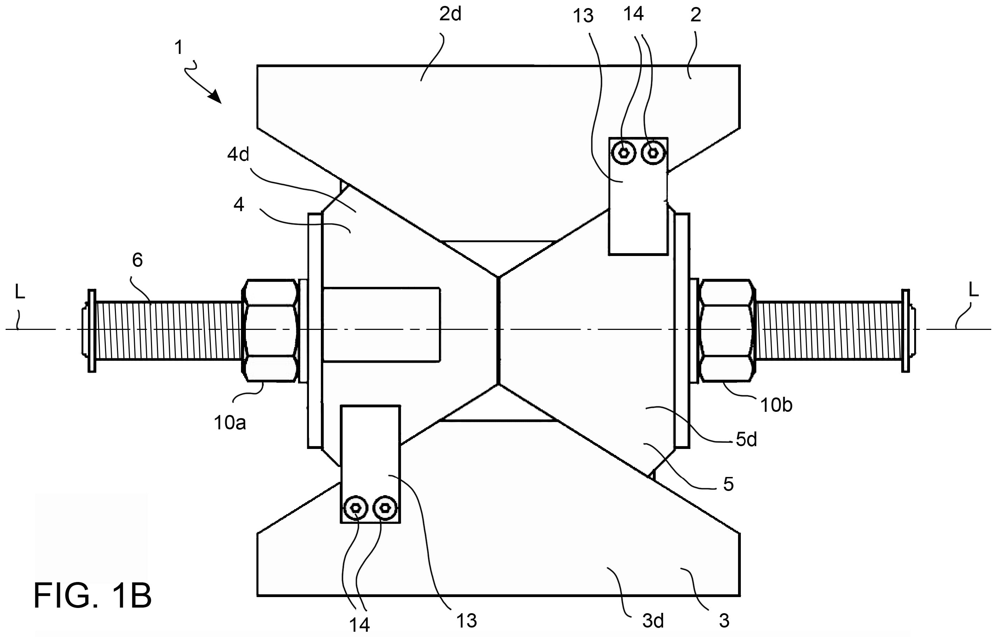

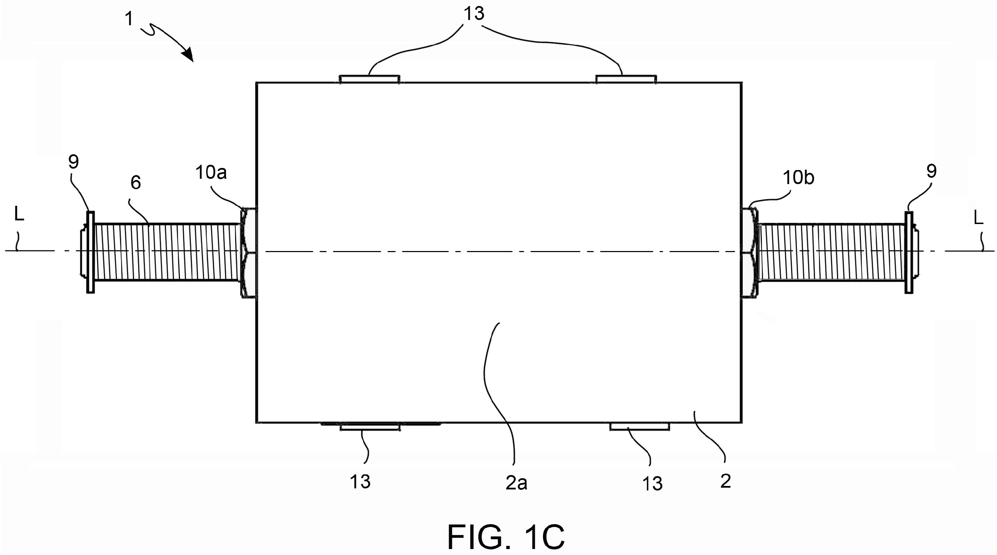

In a first embodiment, shown in Figures 1A, 1B and 1C, the side faces 2d, 3d, 4d, 5d of the wedge-shaped elements 2, 3, 4, 5 are juxtaposed on both sides of the wedge-shaped elements 2, 3, 4, 5.

Furthermore, all the side faces 2d, 3d, 4d, 5d of the wedge-shaped elements 2, 3, 4, 5 are vertical, parallel among themselves, and are moreover parallel to the axis L as well.

The wedge-shaped elements 2, 3, 4, 5, therefore, all have a constant and equal width; by "width" is meant the dimension parallel to the ground and perpendicular to the axis L.

In said first embodiment, the system for the lateral control of the slippage comprises one or more plates 13 for the lateral control of the slippage and a fixing system 14 for fixing each plate 13 to a side face 2d, 3d, 4d, 5d.

The plates 13 are preferably made of metal material.

The fixing system 14 of each plate 13 typically corresponds instead to a screw fixing system passing through each plate 13, particularly with two screws.

In particular, four different plates 13 are provided: two of them are fixed by means of the fixing system 14 to the first wedge-shaped support element 2, and two of them are fixed by means of the fixing system 14 to the second wedge-shaped support element 3.

Furthermore, the two plates 13 fixed to the first wedge-shaped support element 2 are each arranged on a different side face 2d; similarly, the two plates 13 fixed to the second wedge-shaped support element 3 are each arranged on a different side face 3d.

In other embodiments, the plates 13 can alternatively be fixed to the wedge-shaped adjustment elements 4, 5 instead of to the wedge-shaped support elements 2, 3.

Each plate 13 is further dimensioned to laterally contain one of the wedge-shaped adjustment elements 4, 5 and thus avoid relative slippage between the latter and the wedge-shaped support elements 2, 3 to which the plates 13 themselves are fixed.

In particular, for obvious geometric reasons, each plate 13 abuts against the wedge-shaped adjustment element 4, 5 that it must contain.

Preferably, the arrangement of the plates 13 provides for a diagonal positioning.

On the same side of the leveler 1, the plate 13 fixed to the side face 2d is in containment of one of the two wedge-shaped adjustment elements 4, 5, while the plate 13 fixed to the side face 3d is in containment of the other of the two wedge-shaped adjustment elements 4, 5.

On the two opposite sides of the leveler 1, the plate 13 fixed to one of the two side faces 2d is in containment of one of the two wedge-shaped adjustment elements 4, 5, while the plate 13 fixed to the other of the two side faces 2d is in containment of the other of the two wedge-shaped adjustment elements 4, 5.

Similarly, the same principle applies to the plates 13 fixed to the side faces 3d.

This particular diagonal arrangement provides advantages from the point of view of the distribution of forces, which in this way is more uniform; however, the operation of the system for the lateral control of the slippage does not fail even in the case of a different arrangement.

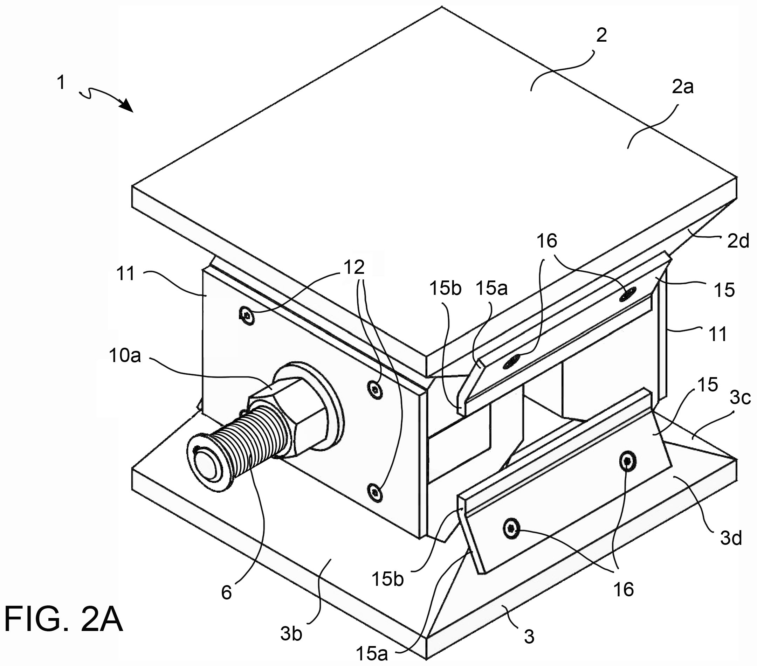

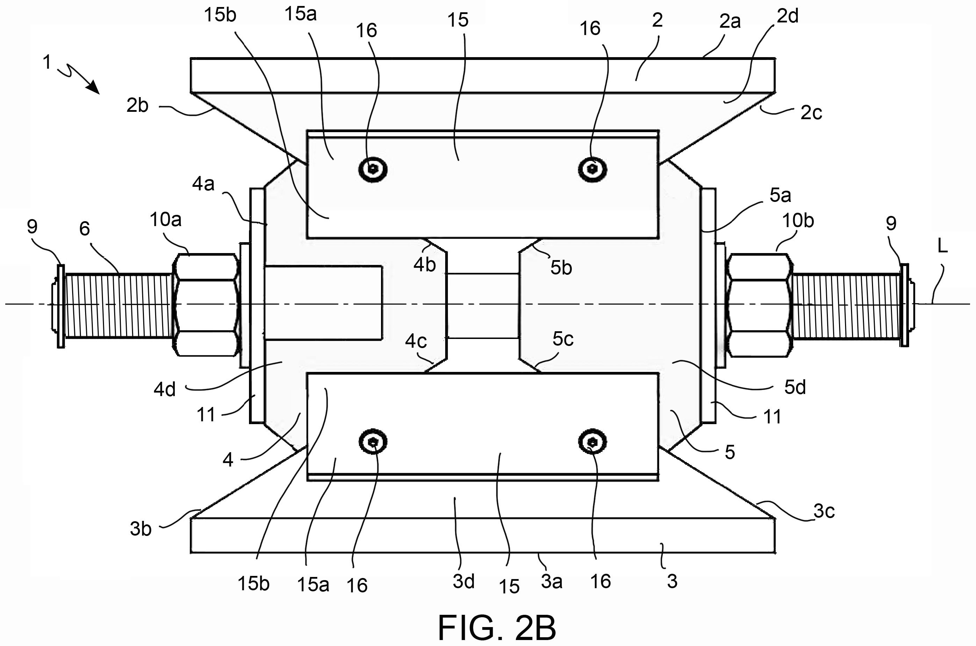

In a second embodiment, shown in Figures 2A and 2B, the side faces 4d, 5d of the wedge-shaped adjustment elements 4, 5 are vertical, parallel among themselves, and are moreover parallel to the axis L as well.

The wedge-shaped adjustment elements 4, 5, therefore, have a constant and equal width.

The side faces 2d, 3d of the wedge-shaped support elements 2, 3 are instead oblique and converging.

In said second embodiment, the system for the lateral control of the slippage comprises one or more plates 15 for the lateral control of the slippage and a fixing system 16 for fixing each plate 15 to a side face 2d, 3d.

The plates 15 can be made of metal material.

The fixing system 16 of each plate 15 typically corresponds instead to a screw fixing system passing through each plate 15, particularly with two screws.

In particular, four different plates 15 are provided: two of them are fixed by means of the fixing system 16 to the first wedge-shaped support element 2, and two of them are fixed by means of the fixing system 16 to the second wedge-shaped support element 3.

Furthermore, the two plates 15 fixed to the first wedge-shaped support element 2 are each arranged on a different side face 2d; similarly, the two plates 15 fixed to the second wedge-shaped support element 3 are each arranged on a different side face 3d.

Each plate 15 is further dimensioned to laterally contain both wedge-shaped adjustment elements 4, 5 and thus avoid relative slippage between the latter and the wedge-shaped support element to which the plate 15 itself is fixed.

The plates 15 have a cross-section with a V-shaped profile with an obtuse angle which identifies two portions 15a, 15b of different width.

In particular, the larger portion 15a is fixed with the fixing system 16 to the corresponding side face 2d, 3d, while the smaller portion 15b is placed parallel to the side faces 4d, 5d.

In the embodiment shown in the figures, the smaller portion 15b abuts against the side faces 4d, 5d, but some clearance can also be provided.

The plates 15, moreover, have an extension surface such as to allow interference with a possible lateral slippage of the wedge-shaped adjustment elements 4, 5 both in the condition of maximum distancing and of minimum approach of the wedge-shaped support elements 2, 3, as well as in every intermediate condition thereof.

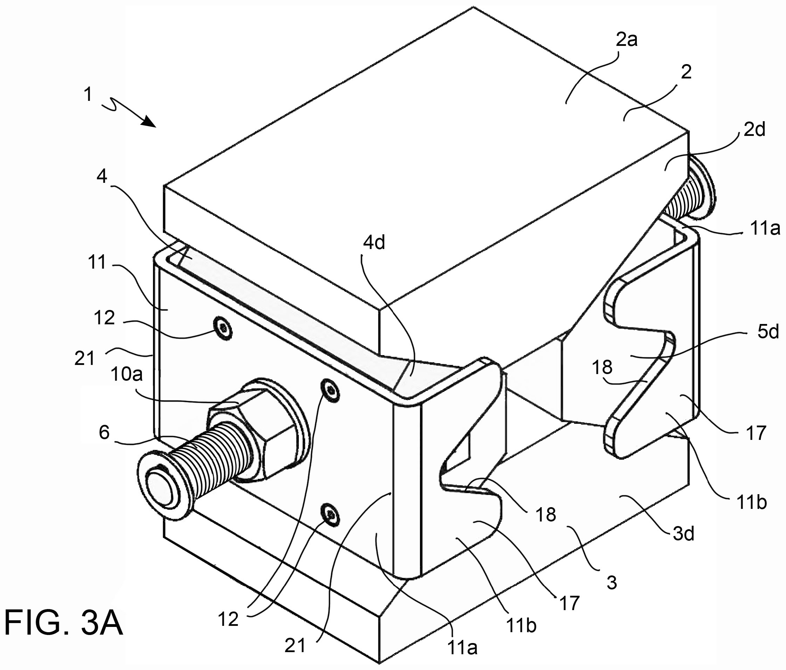

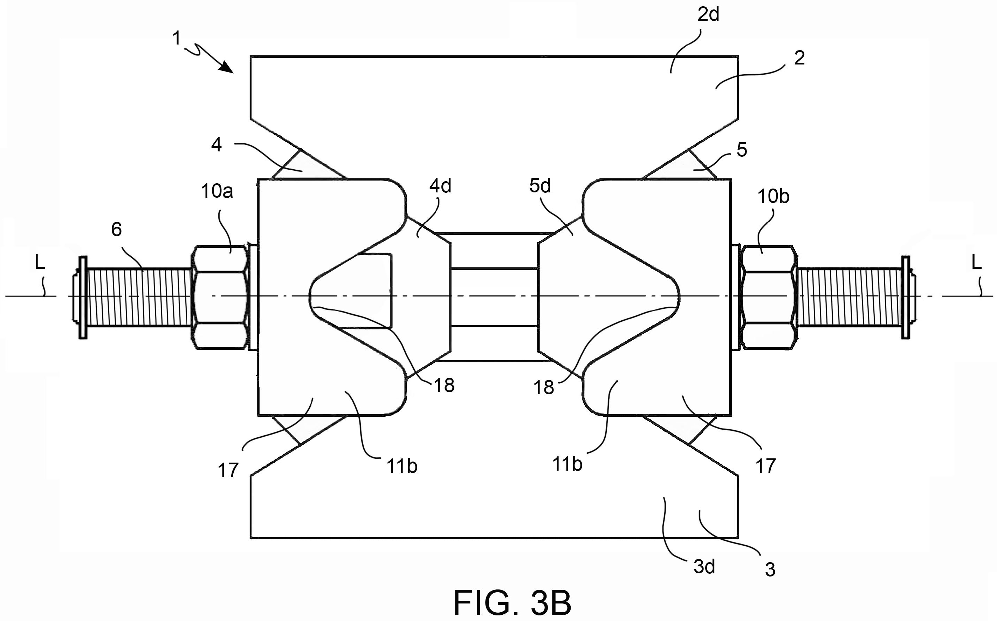

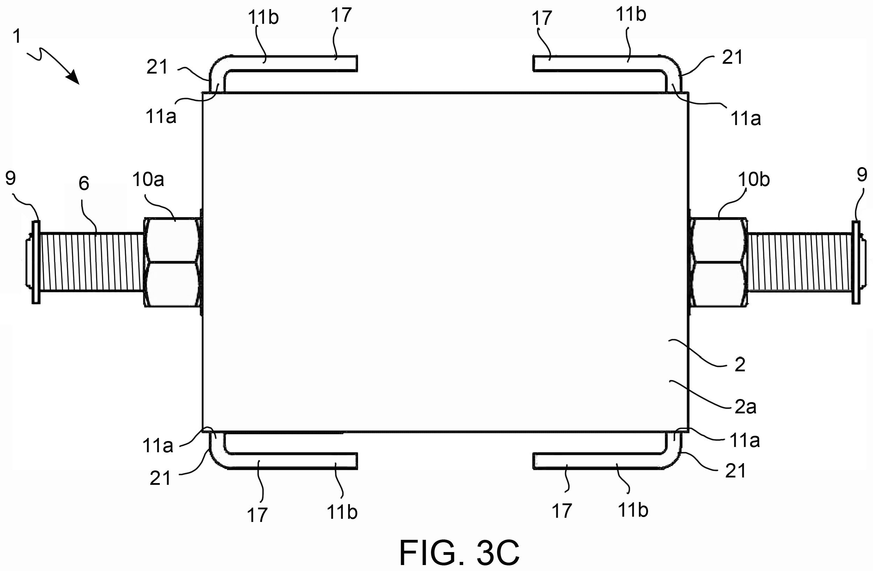

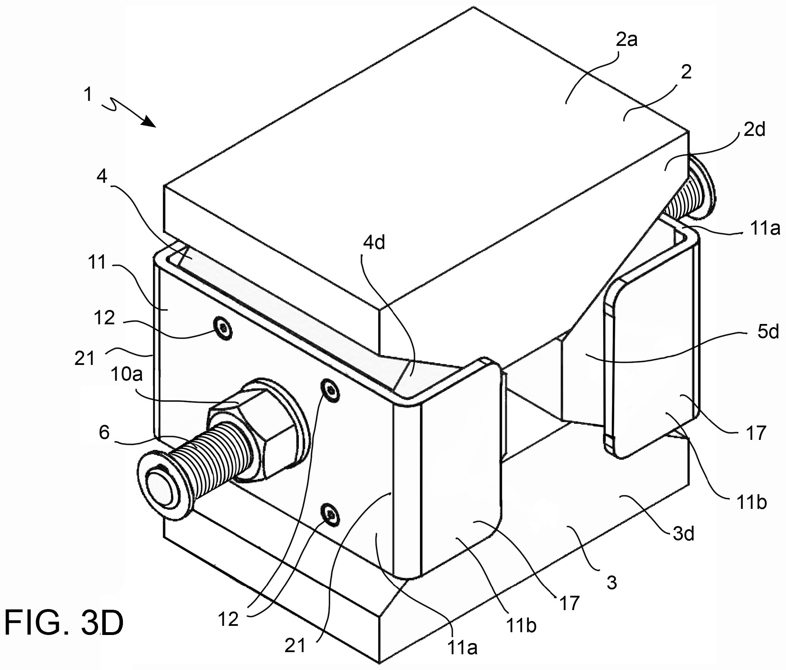

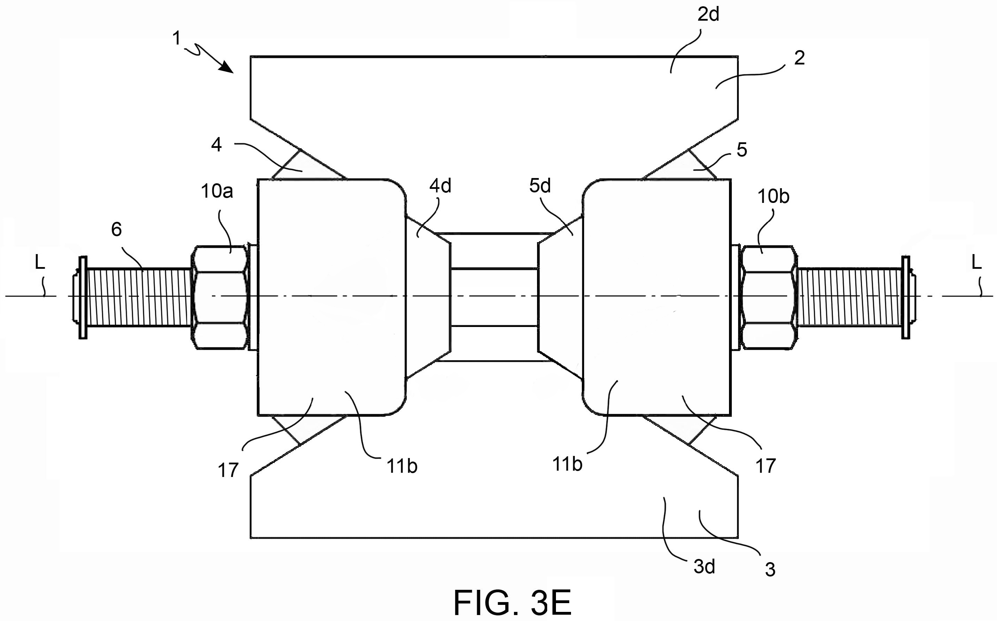

In a third embodiment, shown in Figures 3A, 3B, 3C, 3D and 3E all the side faces 2d, 3d, 4d, 5d of the wedge-shaped elements 2, 3, 4, 5 are vertical, parallel among themselves, and are moreover parallel to the axis L as well.

The wedge-shaped elements 2, 3, 4, 5, therefore, all have a constant and equal width.

In said third embodiment, the system for the lateral control of the slippage comprises one or more plates 17 for the lateral control of the slippage associated with the reinforcing plates 11 and a fixing system for fixing each plate 17 to an end of the reinforcing plate 11.

In particular, each reinforcing plate 11 has two vertical edges 21, and for each reinforcing plate 11 two plates 17 are provided, one for each vertical edge 21.

The plates 17 are substantially parallel to the side faces 2d, 3d, 4d, 5d.

Furthermore, the plates 17 fixed to the reinforcing plate 11 adjacent to the side face 4d of the first wedge-shaped adjustment element 4 face towards the second wedge-shaped adjustment element 5, and vice versa.

In other words, the plates 17 face each other in pairs, and, in more general terms, all the plates 17 face towards the center of the leveler 1.

The fixing system of each plate 17 to an end of the reinforcing plate 11 can be of a welding type or other types of rigid constraint; alternatively, as in the embodiment shown in the attached figures, the plates 17 can also be made in one piece with the reinforcing plate 11.

In the case shown in the attached figures, therefore, the plates 17 consist of folded lateral terminals 11b with an angle of approximately 90° with respect to the main body 11a.

The folded lateral terminals 11b can be formed by a simple mechanical bending operation of the ends of the reinforcing plate 11.

The plates 17 can have any free shape, provided they have a minimum dimension that allows lateral interference with the wedge-shaped support elements 2, 3 in the event of lateral slippage of the latter or in the event of lateral slippage of the wedge-shaped adjustment elements 4, 5, both in the condition of maximum distancing and of minimum approach of the wedge-shaped support elements 2, 3, as well as in every intermediate condition thereof.

In a first alternative, shown in figures 3D, 3E, the plates 17 are mainly rectangular in shape.

In a second alternative, shown in figures 3A, 3B and 3C, the plates 17 are mainly rectangular in shape, with a V-shaped recess 18 in the central part.

The recess 18 is symmetrical, is placed at an equal distance from the upper and lower ends of the plates 17 and faces the reinforcing plate 11 with the tip of the V.

The function of the recess 18 is to lighten the structure of the plates 17 in an area not very functional to the purpose of the plates 17 themselves, since only the upper area and the lower area of the plates 17 are subject to lateral interference with the wedge-shaped support elements 2, 3.

The presence of the recess 18 therefore allows reducing the weight of the plates 17 and consequently of the entire leveler 1, and moreover allows facilitated access to the central area of the leveler 1 for any inspections or maintenance.

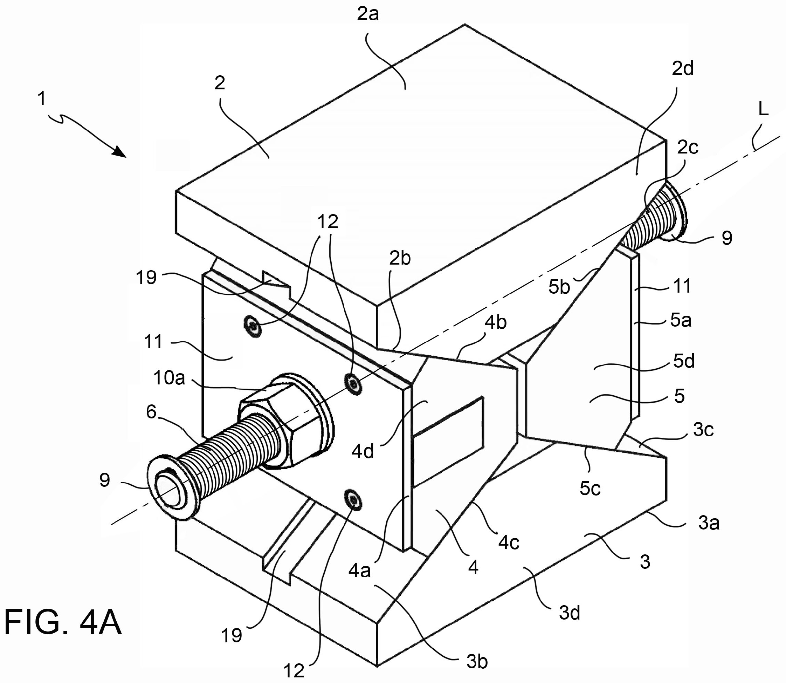

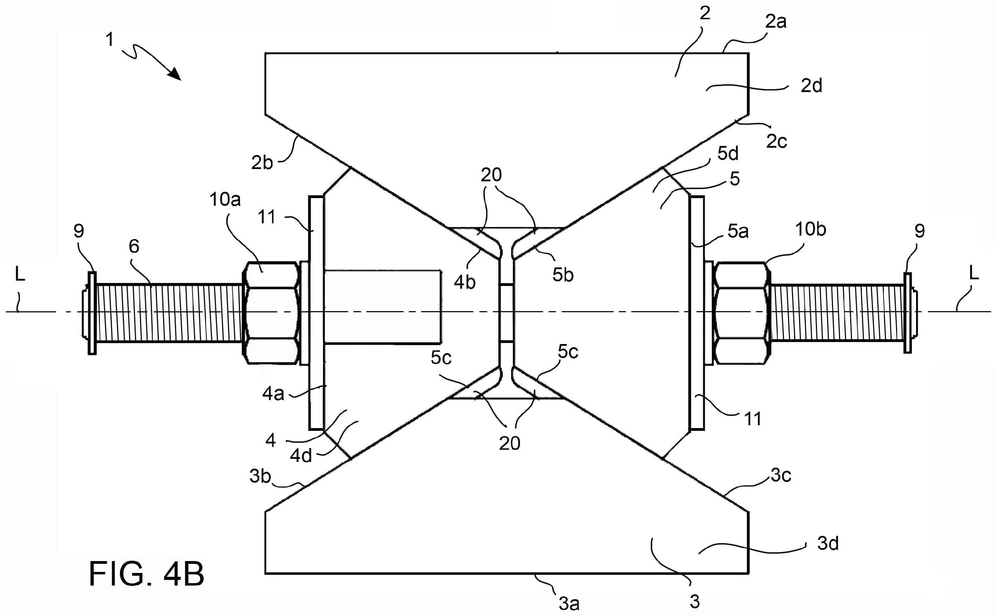

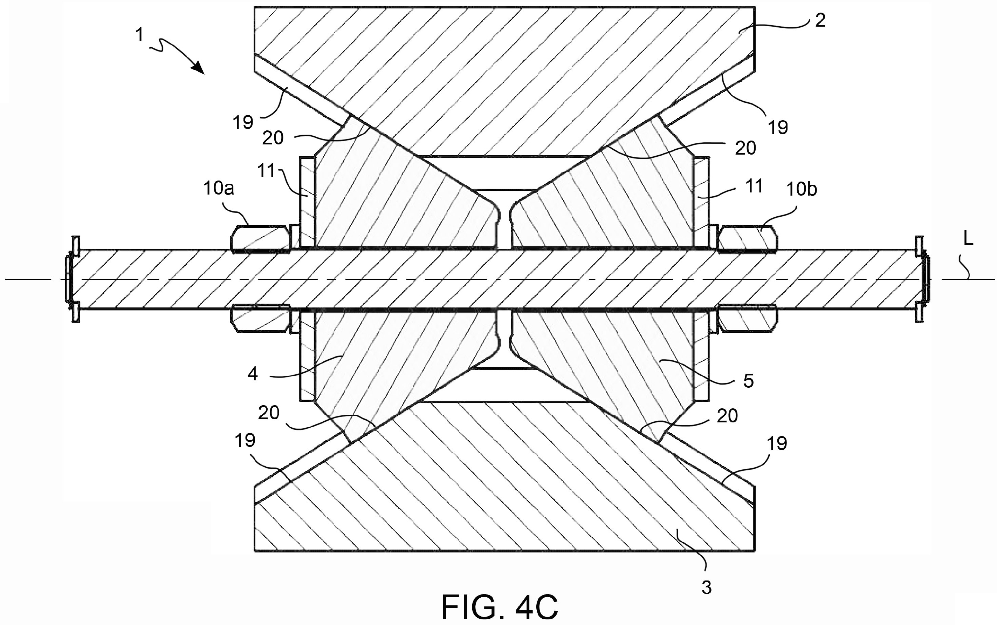

In a fourth embodiment, shown in Figures 4A, 4B and 4C, all the side faces 2d, 3d, 4d, 5d of the wedge-shaped elements 2, 3, 4, 5 are vertical, parallel among themselves, and are moreover parallel to the axis L as well.

The wedge-shaped elements 2, 3, 4, 5, therefore, all have a constant and equal width.

In said fourth embodiment, the system for the lateral control of the slippage comprises one or more pairs of grooves 19 and protrusions 20 of conjugated shape made on the wedge-shaped elements 2, 3, 4, 5.

In particular, four pairs of grooves 19 and protrusions 20 of conjugated shape are provided: a first pair between the first wedge-shaped support element 2 and the first wedge-shaped adjustment element 4, a second pair between the first wedge-shaped support element 2 and the second wedge-shaped adjustment element 5, a third pair between the second wedge-shaped support element 3 and the first wedge-shaped adjustment element 4, and a fourth pair between the second wedge-shaped support element 3 and the second wedge-shaped adjustment element 5.

Both the grooves 19 and the protrusions 20 are made on the oblique faces 2b, 2c, 3b, 3c, 4b, 4c, 5b, 5c of the wedge-shaped elements 2, 3, 4, 5.

More in detail, the grooves 19 and the protrusions 20 are made at the center of the oblique faces 2b, 2c, 3b, 3c, 4b, 4c, 5b, 5c, in such a way as to make the wedge-shaped elements 2, 3, 4, 5 symmetrical with respect to a vertical plane passing through the axis L.

Furthermore, the grooves 19 and the protrusions 20 are made along an oblique line passing through said vertical plane passing through the axis L, said line is moreover inclined by an angle equal to the inclination of the oblique faces 2b, 2c, 3b, 3c, 4b, 4c, 5b, 5c.

This means that the bottom of the grooves 19 and the crests of the protrusions 20 are monotonic and parallel to the corresponding oblique face 2b, 2c, 3b, 3c, 4b, 4c, 5b, 5c.

In this way, the presence of the grooves 19 and of the protrusions 20 does not affect the possibility of lifting the first wedge-shaped support element 2, since the sliding of the inclined planes remains unaltered.

Furthermore, the grooves 19 and the protrusions 20 extend for the entire extension in the direction of said line of the oblique faces 2b, 2c, 3b, 3c, 4b, 4c, 5b, 5c, so as to allow reaching both cases of maximum distancing and minimum approach of the wedge-shaped support elements 2, 3.

Preferably, as shown in the attached figures, the grooves 19 are all made on the wedge-shaped support elements 2, 3, while the protrusions 20 are all made on the wedge-shaped adjustment elements 4, 5, but it is not excluded that the opposite may be provided.

In practice it has been found that the leveler according to the invention is particularly advantageous because it allows avoiding a relative slippage between the wedge-shaped elements along the axis parallel to the ground and perpendicular to the axis of the adjustment screw.

This is made possible thanks to the presence of the system for the lateral control of the relative slippage between the wedge-shaped support elements and the wedge-shaped adjustment elements.

Furthermore, the first and the second embodiment described above allow adapting the system for the lateral control of the slippage of the invention also to levelers of the prior art.

It is evident that only some particular embodiments of the present invention have been described, to which the person skilled in the art will be able to make all those modifications necessary for its adaptation to particular applications, without however departing from the scope of protection of the present invention as defined by the attached claims.

## Claims

1. A support device (1) for heavy loads comprising a first and a second wedge-shaped support element (2, 3), a first and a second wedge-shaped adjustment element (4, 5), an adjustment member (6) for adjusting the mutual distance between said first and second wedge-shaped adjustment elements (4, 5), wherein said first wedge-shaped support element (2) comprises an upper face (2a), configured to support the heavy load, and two converging oblique faces (2b, 2c), and two side faces (2d), wherein the second wedge-shaped support element (3) comprises a lower face (3a), configured to support the support device (1) on a fixed surface, two converging oblique faces (3b, 3c), and two side faces (3d), said first and second wedge-shaped support elements (2, 3) being arranged so that the respective oblique faces (2b, 2c, 3b, 3c) face one another; and wherein said first and second wedge-shaped adjustment elements (4, 5) comprise a front face (4a, 5a), an upper oblique face (4b, 5b), a lower oblique face (4c, 5c), and two side faces (4d, 5d), respectively, wherein said upper (4b, 5b) and lower (4c, 5c) oblique faces are converging and wherein said wedge-shaped adjustment elements (4, 5) are arranged so that the respective oblique faces (4b, 5b, 4c, 5c) face one another; and wherein said upper oblique faces (4b, 5b) act on said oblique faces (2b, 2c) of the first wedge-shaped support element (2), respectively, and said lower oblique faces (4c, 5c) act on said oblique faces (3b, 3c) of the second wedge-shaped support element (3), respectively, **characterized in that** it comprises a system for the lateral control of the relative slippage between said first and second wedge-shaped support elements (2, 3) and said first and second wedge-shaped adjustment elements (4, 5).

2. The support device (1) according to claim 1, wherein the adjustment member (6) comprises a longitudinal body (7) with a longitudinal axis (L) ending at the two ends with a first (7a) and a second (7b) threaded portion, and backing elements (10a, 10b) placed on said first and second threaded portions (7a, 7b), respectively, the adjustment member (6) being inserted in a through hole present on the front faces (4a, 5a) of the wedge-shaped adjustment elements (4, 5), so that the threaded portions (7a, 7b) and the respective backing elements (10a, 10b) emerge out of the wedge-shaped adjustment elements (4, 5).

3. The support device (1) according to claim 1, wherein the adjustment member (6) comprises a single screw comprising a longitudinal body having a threaded portion and a locking end, the threaded portion being coupled to a backing element, the adjustment member (6) being inserted into a through hole present on the front faces (4a, 5a) of the wedge-shaped adjustment elements (4, 5), so that the locking end and the threaded portion emerge out of the wedge-shaped adjustment elements (4, 5).

4. The support device (1) according to any preceding claim, wherein said support device (1) comprises reinforcing plates (11) parallel and adjacent to said front faces (4a, 5a).

5. The support device (1) according to any preceding claim, wherein said system for the lateral control of the slippage comprises one or more plates (13, 15, 17) for the lateral control of the slippage.

6. The support device (1) according to claim 5, wherein said plates (13, 15, 17) are made of metal material.

7. The support device (1) according to any one of claims 5 or 6, wherein said system for the lateral control of the slippage comprises a fixing system (14) for fixing each plate (13) to one of the side faces (2d, 3d, 4d, 5d).

8. The support device (1) according to claim 7, wherein said side faces (2d, 3d, 4d, 5d) of said wedge-shaped elements (2, 3, 4, 5) are vertical, are parallel among themselves, and are parallel to said axis (L), wherein two plates (13) are provided, fixed by means of said fixing system (14) to said first wedge-shaped support element (2) and each arranged on a different side face (2d), and wherein two plates (13) are provided, fixed by means of said fixing system (14) to said second wedge-shaped support element (3) and each arranged on a different side face (3d).

9. The support device (1) according to any one of claims 5 or 6, wherein said system for the lateral control of the slippage comprises a fixing system (16) for fixing each plate (15) to one of the side faces (2d, 3d).

10. The support device (1) according to claim 9, wherein said side faces (4d, 5d) of said wedge-shaped adjustment elements (4, 5) are vertical, are parallel among themselves, and are parallel to said axis (L), wherein said side faces (2d, 3d) of said wedge-shaped support elements (2, 3) are oblique and converging, wherein two plates (15) are provided, fixed by means of said fixing system (16) to said first wedge-shaped support element (2), each arranged on a different side face (2d), and wherein two plates (15) are provided, fixed by means of said fixing system (16) to said second wedge-shaped support element (3), each arranged on a different side face (3d).

11. The support device (1) according to any one of claims 9 or 10, wherein said plates (15) have a cross-section with a V-shaped profile with an obtuse angle which identifies two portions (15a, 15b) of different width, wherein the larger portion (15a) is parallel and fixed with said fixing system (16) to the corresponding side face (2d, 3d), and wherein the smaller portion (15b) is parallel to the side faces (4d, 5d).

12. The support device (1) according to any one of claims 5 or 6, wherein said system for the lateral control of the slippage comprises a fixing system for fixing each plate (17) to an end of said reinforcing plate (11).

13. The support device (1) according to claim 12, wherein said side faces (2d, 3d, 4d, 5d) of said wedge-shaped elements (2, 3, 4, 5) are vertical, are parallel among themselves, and are parallel to said axis (L), wherein each reinforcing plate (11) has two vertical edges (21), and two plates (17) are provided for each reinforcing plate (11), one for each vertical edge (21), fixed by means of said fixing system or made in one piece with said reinforcing plate (11), wherein said plates (17) are substantially parallel to said side faces (2d, 3d, 4d, 5d).

14. The support device (1) according to any one of claims 12 or 13, wherein said plates (17) are mainly rectangular in shape.

15. The support device (1) according to claim 14, wherein said plates (17) have a V-shaped recess (18) in the central part, said recess (18) being symmetrical, being placed at an equal distance from an upper end and a lower end of said plates (17) and facing said reinforcing plate (11) with the tip of the V.
